# EUROPEAN PATENT SPECIFICATION

(11) **EP 0 586 506 B1**
(45) Date of publication and mention of the grant of the patent: **16.10.1996**
(21) Application number: 92911886.7
(22) Date of filing: 19.05.1992
(51) Int. Cl.: B62D 7/16

(54) **MEANS FOR LIMITING THE STEERING MOVEMENT AT A VEHICLE**
VORRICHTUNG ZUM BEGRENZEN DER LENKBEWEGUNG BEI EINEM FAHRZEUG
MOYENS DE LIMITATION DU DEPLACEMENT DE LA DIRECTION D'UN VEHICULE

(30) Priority: 07.06.1991 SE 9101753
(43) Date of publication of application: 16.03.1994
(73) Proprietor: AB VOLVO, 405 08 Göteborg (SE)
(72) Inventor: LARSSON, Lars, S-433 70 Partille (SE)
(74) Representative: Kristiansen, Alf P.
(86) International application number: PCT/SE92/00329
(87) International publication number: WO 92/21547

(56) References cited:
- US-A- 4 653 773

## Description

### TECHNICAL FIELD:

The present invention relates to a means for limiting the steering movement of a vehicle, especially cars.

### PRIOR ART:

It is commonly known that when one shall swing the front wheels of a vehicle then a limitation of the swinging movement must be present. The reason for this is mainly that the wheels all the time shall be free and not touch any surrounding part so that the wheels or the vehicle is damaged or the swinging is influenced disadvantageously. This wanted limitation of the steering movement can be obtained in different ways by means of some means which can be present from the steering wheel and down to carrying the wheels. These arrangements are mainly based on the fact that some part of the steering arrangement shall abut against some rigid part in the vehicle so that the swinging movement is limited. One example of such a device is shown in the US-patent 4 653 773 which describes a means for limiting the steering movement of a vehicle, comprising a pin shaped stroke limiter arranged on the steering knuckle and having a curved abutment surface which is intended to abut against a stop member at full angular displacement of the steering mechanism.

### TECHNICAL PROBLEM:

The front part of a car is always spring suspended. This means that it can move both vertically and to some extent horizontally in relation to the wheels which necessarily must be on the ground. The wheels and other devices which are united to the wheels are adjusted in a sophisticated way in relation to the car as such for obtaining the optimal driving properties e t c. When however the car is moving on the springs in some direction then this adjustment will be influenced and it can be necessary with an automatic regulation of the adjustment when this springing movements occurs. It can for instance be so that if the wheels have been swung maximally and the swinging movement limiter for the wheels abuts some part of the car then for example on an uneven way when side acceleration or braking occurs, tyres of the wheels can come into contact with the forward side beams or other part of the car. The movement limitation should therefore be made in such a way that at such conditions it is changed so that the wheels all the time are free.

### THE SOLUTION:

According to the present invention one has solved the above mentioned problems and brought about a means for limiting the steering movement of a vehicle comprising a means for limiting the steering movement of a vehicle, comprising a pin shaped stroke limiter arranged on the steering knuckle and having a curved abutment surface which is intended to abut against a stop member at full angular displacement of the steering mechanism, said means being characterised in that the stop member is adjustably mounted on a suspension arm connected to the vehicle body, and the curved abutment surface of the pin shaped stroke limiter is such that the full angular displacement of the steering mechanism is different at different suspension compressions.

According to an embodiment of the invention the surface of the stop against the stroke limiter can be oblique in relation to the moving direction of the stroke limiter.

Further, according to another embodiment of the invention the connecting surface of the stop against the suspension arm can also be oblique in relation to the moving direction of the stroke limiter.

The mutual connecting surfaces of the stop and the suspension arm can for the purpose of the adjustment and the locking according to the invention be step- or waveshaped.

The stop can be locked at the suspension arm by means of friction and/or spring tension.

### DESCRIPTION OF THE FIGURES:

The invention will in the following be described more in detail in connection with the attached drawings where:
- Fig. 1: shows a steering knuckle from the side, where
- Fig. 2: shows a section through the steering knuckle, where
- Fig. 3: shows a suspension arm seen from above and where
- Fig. 4: shows a removable stop according to the invention.

### PREFERRED EMBODIMENT:

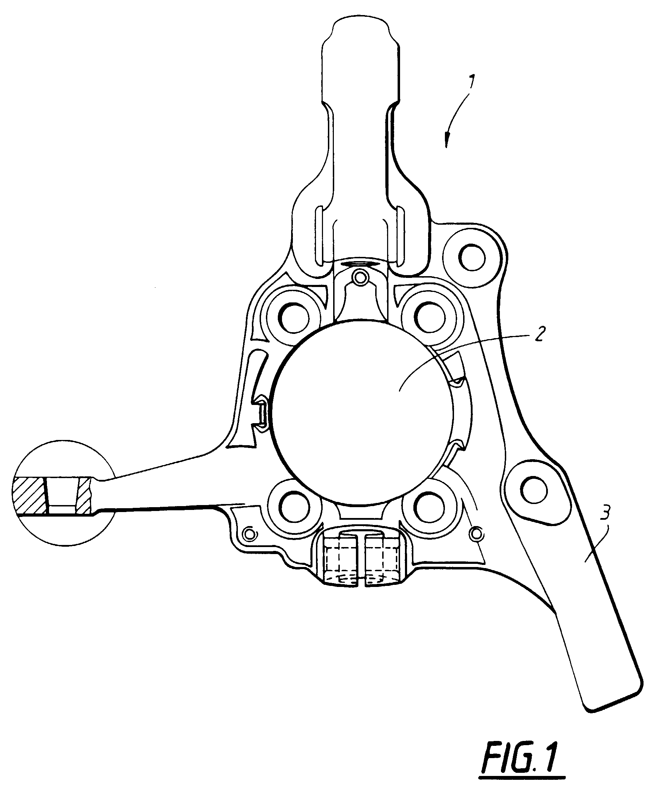

Fig. 1 shows a steering knuckle 1. This has a central circular hole 2 for the wheel hub and usual attachment and connecting means for the spring strut, steering connecting rod e t c. The stroke limiter 3 according to the invention is shown as one from the steering knuckle 1 protruding pin like organ. This organ 3 is on Fig. 1 substantially straight but has a curved underside.

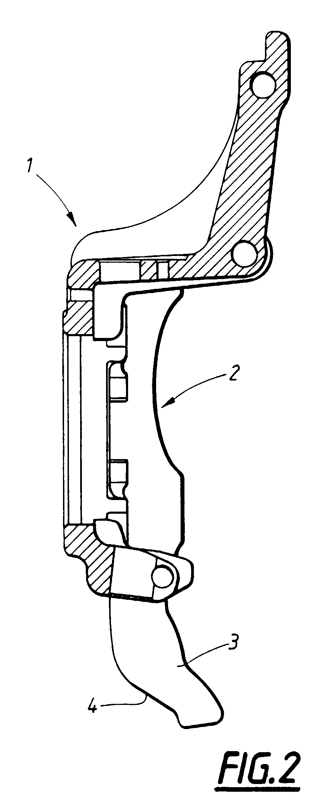

Fig. 2 shows the same steering knuckle as the one in Fig. 1 in section. The pin shaped stroke limiter 3 which in this figure is shown from the side is curved and it has an abutment surface 4 which is intended to abut against another stop.

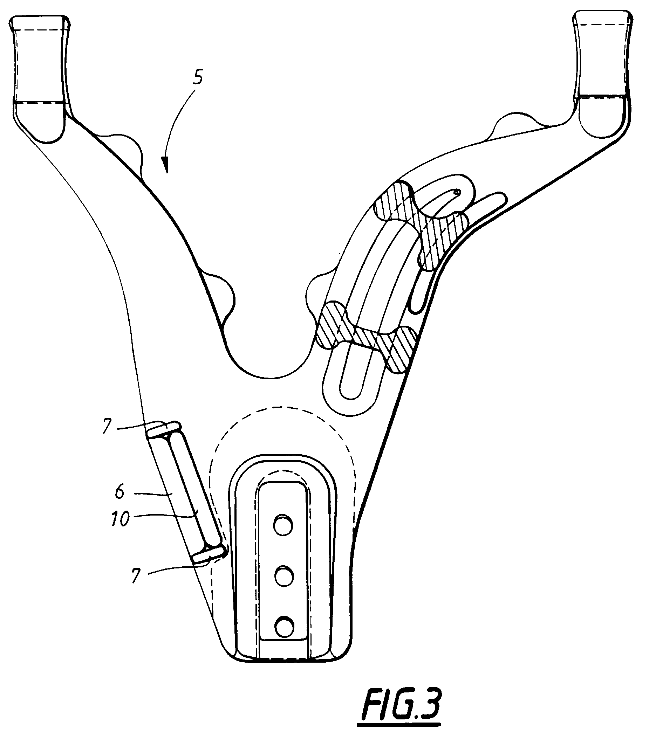

Fig. 3 shows a so called suspension arm against which the stroke limiter 3 will abut at full angular displacement of the wheels. This suspension arm 5 which is of a relatively conventional kind has a part 6 against which the stroke limiter shall abut. This part 6 is according to the invention suitably provided with a stop of preferably resilient steel. The surface 6 can have an even shape as is shown in the figure and be limited at the sides by protrusions 7. The suspension arm 5 which has a limited thickness can be made of light metal which is desirable as the part of a vehicle which is not springloaded shall be as easy as possibly. Light metal is usually not abrasion resistant so that a mounted stop of steel around the surface 6 makes it possible to produce the suspension arm 5 from aluminium.

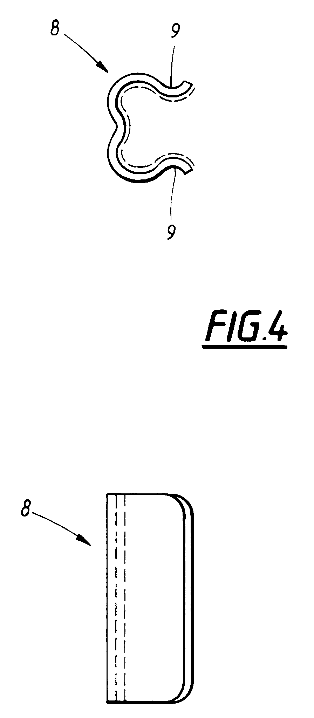

Fig. 4 shows finally a stop 8 which can be snapped on the surface 6 of the suspension arm 5. This stop 8 has a longitudinal shape and a section in the shape of a modified U with inwardly bent legs 9. The reason for this is that the stop shall be passed on the suspension arm 5 and be locked at this through the cooperation between the legs 9 with recesses 10 in the suspension arm.

As the stop 8 can be snapped on the suspension arm 5 in a simple way it is also easy to remove this and replace it by another stop. This can be advantageous when one wants to change the angular displacement of the steering mechanism, for example decrease it by having the stop 8 meet the stroke limiter 3 at an earlier stage. This is desirable if one puts on bigger tyres on the wheels so that one has to have a somewhat smaller stroke limit to prevent the tyres from touching the forward side beams or something else. The new stop can for example have a thicker wall thickness or it can be made with a protruding back or the like, which stops the stroke limiter at an earlier stage.

Another way to change the stroke limit for the steering is to make the stop in such a way that the abutment surface thereon becomes oblique in relation to the moving direction of the stroke limiter and to make it possible to displace the stop in its longitudinal direction. One can also let the surface of the stop against the stroke limiter be perpendicular in relation to this and instead let the connecting surface of the stop against the suspension arm be oblique so that one gets the same change of the angular displacement of the steering mechanism. If one chooses these oblique surfaces to adjust the steering movement limit with only one stop then the connecting surface on the stop and the suspension arm can be wave shaped or step shaped so that one can move the stop in a desired direction and to one predetermined position depending on the size of the tyres on the wheels.

The reason that one has given the pin shaped stroke limiter a curved abutment surface 4 is that the angular displacement of the steering mechanism shall be different at different suspension compression of the forward part of the vehicle. The vehicle should namely have its smallest turning diameter when one drives slowly on an even road with maximum angular displacement of the steering mechanism. If the wheels at the full angular displacement however are moved inwards due to the spring action or due to for example an uneven road surface, high side acceleration or braking the stroke limiter has got such a shape that it will come into contact with the stop on the suspension arm and presses thereby the wheels back so that the tyres will not come into contact with for example the formed side beams.

The invention is not limited to the embodiment example shown but can be varied in different ways with in the scope of the claims.

## Claims

1. Means for limiting the steering movement of a vehicle, comprising a pin shaped stroke limiter (3) arranged on the steering knuckle (1) and having a curved abutment surface (4) which is intended to abut against a stop member (8) at full angular displacement of the steering mechanism, characterised in that:
- the stop member (8) is adjustably and exchangeably mounted on a suspension arm (5) connected to the vehicle body, and
- the curved abutment surface (4) of the pin shaped stroke limiter (3) is such that the full angular displacement of the steering mechanism is different at different suspension compressions.

2. Means according to claim 1,
**characterized** in that the surface of the stop (8) against the stroke limiter (3) is oblique in relation to the moving direction of the stroke limiter (3).

3. Means according to claim 1 or 2,
**characterized** in that the connecting surface of the stop (8) against the suspension arm (5) is oblique in relation to the movement direction of the stroke limiter (3).

4. Means according to any of the claims 1-3,
**characterized** in that the mutual connecting surfaces of the stop (8) and the suspension arm (5) are step- or wave shaped.

5. Means according to any of the claims 1-4,
**characterized** in that the stop (8) is locked to the suspension arm (5) by means of friction and/or spring tension.

## Patentansprüche

1. Mittel zum Begrenzen der Steuerbewegung eines Fahrzeuges, mit einem stiftförmigen Hubbegrenzer (3), der auf dem Steuergelenk (1) angeordnet ist und eine gekrümmte Widerlageroberfläche (4) hat, welche gegen ein Anschlagteil (8) bei voller Winkelverstellung des Steuermechanismus anstoßen soll,
**dadurch gekennzeichnet, daß**
- das Anschlagteil (8) auf einem mit dem Fahrzeugkörper verbundenen Aufhängearm (5) einstellbar und austauschbar angebracht ist und
- die gekrümmte Widerlageroberfläche (4) des stiftförmigen Hubbegrenzers so ist, daß die volle Winkelverstellung des Steuermechanismus bei unterschiedlichen Aufhängedrücken unterschiedlich ist.

2. Mittel nach Anspruch 1, dadurch gekennzeichnet, daß die Oberfläche des Anschlagteiles (8) gegen den Hubbegrenzer (3) bezüglich der Bewegungsrichtung des Hubbegrenzers (3) schräg ist.

3. Mittel nach Anspruch 1 oder 2, dadurch gekennzeichnet, daß die Verbindungsoberfläche des Anschlages (8) gegen den Aufhängearm (5) im Verhältnis zur Bewegungsrichtung des Hubbegrenzers (3) schräg ist.

4. Mittel nach einem der Ansprüche 1 bis 3, dadurch gekennzeichnet, daß die gegenseitigen Verbindungsoberflächen des Anschlages (8) und des Aufhängearmes (5) stufen- oder wellenförmig sind.

5. Mittel nach einem der Ansprüche 1 bis 4, dadurch gekennzeichnet, daß der Anschlag (8) mittels Reibung und/oder Federspannung am Aufhängearm (5) festgesetzt ist.

## Revendications

1. Dispositif destiné à limiter le déplacement de la direction d'un véhicule, comprenant un limiteur (3) de course en forme de broche disposé sur l'articulation (1) de direction et comprenant une surface courbe (4) de butée destinée à être en butée contre un organe d'arrêt (8) pour le déplacement angulaire maximal du mécanisme de direction, caractérisé en ce que :
- l'organe d'arrêt (8) est monté de façon réglable et interchangeable sur un bras (5) de suspension raccordé à la carrosserie du véhicule, et
- la surface courbe (4) de butée du limiteur (3) de course en forme de broche est telle que le déplacement angulaire maximal du mécanisme de direction est différent pour différentes compressions de la suspension.

2. Dispositif selon la revendication 1, caractérisé en ce que la surface de l'organe d'arrêt (8) tournée vers le limiteur (3) de course est oblique par rapport à la direction de déplacement du limiteur (3) de course.

3. Dispositif selon la revendication 1 ou 2, caractérisé en ce que la surface de raccordement de l'organe d'arrêt (8) contre le bras de suspension (5) est oblique par rapport à la direction de déplacement du limiteur (3) de course.

4. Dispositif selon l'une quelconque des revendications 1 à 3, caractérisé en ce que les surfaces mutuelles de raccordement de l'organe d'arrêt (8) et du bras de suspension (5) ont une forme ondulée ou à gradin.

5. Dispositif selon l'une quelconque des revendications 1 à 4, caractérisé en ce que l'organe d'arrêt (8) est bloqué sur le bras de suspension (5) par friction et/ou par la force de traction d'un ressort.
